# EUROPEAN PATENT APPLICATION

(11) **EP 4 101 300 A1**
(43) Date of publication of application: **14.12.2022**
(21) Application number: 22460024.7
(22) Date of filing: 25.05.2022
(51) Int. Cl.: A22C 25/00

(54) **DEVICE FOR INJECTING FISH CARCASSES AND METHOD OF INJECTING FISH CARCASSES**

(30) Priority: 27.05.2021 PL 43801221
(71) Applicant: Inwestpol-Consulting Poland sp.z o.o., 83-050 Kolbudy (PL)
(72) Inventor: Banhegyi, Wiktor, 83-400 Koscierzyna (PL); Nowakowski, Szymon, 11-200 Bartoszyce (PL)
(74) Representative: Czabajski, Jacek

(57) **Abstract**

A device for injecting fish carcasses contains a transport module (13) and an injection module (1) including a head (2) containing a frame (3) with at least one guide (4), on which a needle block (5) with at least one needle unit (6) is placed. The needle unit (6) includes at least one needle module (8b) including needles (8) placed inside a bushing (7). The injection module (1) includes a fish carcass pressing module (9) including at least one top pressing profile (10b), a raising and lowering drive (11) and at least one guide nest (12). The transport module (13) includes a transport chain (14), on which at least one transport nest (15a) for the carcass (15b) is attached. The bottom part of the transport nest (15a) unit is guided along a sliding guide (16) attached to the frame (17) of the transport module (13). The transport chain (14) includes a number of connector pads (18a), wherein each connector pad cooperating with the attaching element (19) of the transport nest (15a) comprises a connector module (18b) of the transport nest (15a). The transport nest (15a) includes a bottom panel with stabilising side elements (20) stabilising the fish carcass (15b), the transport nest (15a) includes a fixture (21) cooperating with the sliding guide (16).

The method of injecting fish carcasses is characterised in that each fish carcass (15b) is transported in a separate transport nest (24) of the transport module (13), to the injecting module (1), where the pressure nest (21) is used to stabilise the fish carcass (15b) in the transport nest (15a). The needle module (8b) is introduced into the carcass (15b) parallel to the spine of the carcass (15b) and the pickling solution is injected, followed by removal of the needle module (8b) from the carcass body (15b). The pressure nest (24) is removed from the carcass (15b) and the injected carcass (15b) is transported to the sliding chute (28) above a container.

## Description

The subject of the invention is a device for injecting fish carcasses and a method of injecting fish carcasses.

Fish pickling is one of the methods of fish product preservation before handing a fish carcass over to a retail chain or for further processing. Needle-type injecting devices are commonly used in the fish processing industry as devices for pickling a fish product or a semi-ready product. Because of the requirements related to the quality and texture of the processed fish product, the fish product or a semi-ready product is a very demanding product. Thus, the design of a device in the form of an injective device must be adapted to the structure of the raw material, such that losses of said product during processes are eliminated. The individual design of an injecting device used for this purpose requires a range of upgrades and enhancements of the functional elements of the design to be introduced compared to the known devices of this type.

A range of known solutions in the field of devices for injecting fish products and semi-ready products exists, including fish carcasses, in an automated process.

The disclosure provided in the Chinese document CN109258764 discloses a known device for automatic processing of salted fish, which includes transferring devices, a fixing frame, fixing clamps, a cylinder, a device for injecting, a hollow rotary shaft and an infusion pipe. The transferring devices are placed parallel to one another within the fixing frame, and multiple sets of clamps affixing the fish carcasses are placed symmetrically on two parallel transferring devices. The top end and the bottom end of the device for injecting are placed, respectively, in rectangular grooves passing through the hollow rotary shaft. One end of the infusion pipe is connected to a high pressure water pipe pumping the injection solution and to a shaft passing through a through depression.

Another solution is known from the publication of the international patent application no. WO 2017/215901. Said solution includes a transport station designed and intended for transport of fish in the transport direction T, orthogonal to the direction, along which the fish carcasses are placed. According to this known solution, the transferring device is intended for horizontal transport of single fish carcasses along the transport path. The transport device includes a transport element, which is driven within a closed circuit and is characterised in that the transferring device is assigned to a collecting device, and these devices cooperate such that the fish may be transferred from a horizontal position on the transport track TL of the conveyor to a hanging position along the transport track TH of the collecting device. The invention is also related to a fish processing machine containing such a transport station and to the corresponding method.

Another solution is disclosed in the Polish application number P.412516, where a needle-type device for injection is the subject of the application. According to this known invention, the device for injection includes a body, in which a moving working table is placed, above which an injecting head supplied with brine through a supplying system is installed and equipped with a mechanism moving the head vertically, driven by the main drive, said head includes a higher number of needles for brine injection, installed in a needle carrier, with a generally rectangular horizontal cross-section, detachably installed on the head. The head is provided with a pressing unit pressing each of the needles within the needle carries and the pressing unit is pressed against the needle carrier once it is placed within the head. The device for injection according to this known solution is provided with a panel pushing off the fish carcasses. The device for injection according to the invention is characterised in that the needle carrier is connected with the pushing panel via a spring unit, while the body is provided with a bumper with the spring unit resting on it during operation of the device for injection.

Solutions known in the field are characterised in that the direction of injecting needle movement is orthogonal to the direction along which the fish carcasses are place on the belt transporting the carcasses under the injecting station.

There is also a range of other, known solution related to the method of injecting fish carcasses in the process of automated injection of a fish product in specialised processing.

From the disclosure of the American patent application US 5773060A, a method of liquid injection into meat is known, including weighing of a meat product, liquid injection, weighing of the meat product after this operation, determining the ratio between these weights, comparing the result with the target ratio and adjusting the needle time in the meat product such that the next meat product has its weight ratio adapted to the target ratio.

Another known solution comes from the American patent application US 2004/241296A1, which discloses a method of gas pumping inside a meat product. The pumping takes place via an injection line placed inside the meat product. Brine can be pumped into the meat product via the main injection line or using an additional injection line. Gas may be injected into a meat product before the brine is injected, after the brine is injection or simultaneous with brine injection. Brine itself may contain additional ingredients. The introduced gas may be any gas or a gas mixture compatible with the processed meat or food and compatible with the injected brine or brines.

Another known solution comes from the disclosure of the international application WO 2017/215901A1, where a fish carcass transporting module is disclosed. According to this known solution, the transport module is provided with grips used to transport individual fish carcasses such that the fish head is raised and the body is orthogonal to the transport direction. Changes of transport rates during fish catching on one side and deposition of a transported fish on the other side of the working conveyor were used. Rate changes are coordinated using data input by the operator. Transport of individual carcasses, namely fish carcasses, is coordinated using a division of the belt conveyor into individual grippers for a single fish carcass, place inside transport guides. Fish carcass shall be understood in this disclosure as a fish carcass with its head removed and disembowelled by cutting and emptying the fish abdomen.

Two main methods of industrial pickling of fish carcasses are commonly known in the fish processing industry. A method of soaking fish carcasses in brine is known. This is a time-consuming process, including, from the technological point of view, storage of fish carcasses in the brine solution for a specific period of time, usually for four days. The second method is the injection method using an automated device for injection, wherein a needle-type head operates horizontally and sprays the fish carcass with brine, in a direction orthogonal to the direction along which the spines of fish carcasses are positioned. The fish carcass is injected randomly. This results in a problem including fish carcasses, which have not been injected and the injected carcasses generally receive a brine dose at random points within the meat structure, which means that the entire meat is not always subjected to the required degree of pickling preserving the product against fouling. It should also be pointed out that the fish processing industry does not use geometric modules adapted to transporting an individual fish carcass. A significant problem during pickling of fish carcasses using the aforementioned methods is meat destruction caused by tearing the meat texture by the injecting needles or destruction of the meat texture caused by excessive injection energy. The skin of the fish carcass is perforated by the injecting needles in the case of this technology.

The objective of the invention is to develop a fish carcass injecting process by designing a structure for individual injection of a specific carcass. The transporting module is provided with a transport bed, adapted to transport and immobilisation of each fish carcass, and with an injection module including two functional parts: the injecting head and the pressure module.

According to the invention, a device for injection of fish carcasses includes a transport module and an injection module, wherein the transport module includes a transport chain unit, the main drive, a guide, a frame and a sliding chute for fish carcasses, while the injection module includes an injection head with the needle module, the drive mechanic of the head and supply connections for the pickling solution.

The device for injection of fish carcasses according to the invention is characterised in that the injection module comprises a head in the form of a frame with at least one guide, on which the needle block containing at least one needle unit containing at least one needle module with needles placed in the bushing of the needle unit is installed. The injection module also includes a fish carcass pressing module including at least one top pressing mould, a raising and lowering drive and at least one guide. The transport module includes a transport chain with at least fish carcass transporting nest attached to it, wherein the bottom part of the transporting nest is guided along a sliding guide attached to the frame of the transport module. The transport chain includes a set of connector pads, wherein each connector pad cooperating with the transport nest attaching element comprises a connector module of the transport nest. The transport nest includes side elements stabilising the fish carcass, wherein the transport nest includes a stabilising attachment on the sliding guide.

According to an embodiment of the invention, the fish carcass transport nest preferably includes a bottom body part and a top tail part with stabilising side elements.

According to an embodiment of the invention, the pressure nest includes a top tail part and a bottom tail part with stabilising side elements.

In a preferable embodiment of the invention, the sliding chute for fish carcasses is attached under the driving shaft of the transport module.

In a preferable embodiment of the invention, the needle block includes at least one needle unit with injecting needles.

The needle module preferably contains four injecting needles.

In another preferable embodiment of the invention, the main drive includes a planetary gear with a servomotor.

According to the invention, the method of injecting fish carcasses is characterised in that the fish carcass is transported to the injecting head, where at least one needle is used to introduce the pickling solution into the fish carcass, and the injected fish carcass is subsequently transported onto the sliding chute.

The method of injecting fish carcasses is characterised in that each fish carcass is transported in a separate transport nest of the transport module, to the injecting module, where the pressure nest is used to stabilise the fish carcass in the transport nest. The needle module is then introduced into the carcass, parallel to the spine of the fish carcass. Next, the pickling solution is injected and the needle module is withdrawn from the carcass body. Next, the pressure nest is removed from the carcass and the injected carcass is transported to the sliding chute.

In a preferable embodiment of the invention, four carcasses are injected using the injection module each time.

According to the invention, injection of a single carcass preferably uses at least one needle module equipped with four needles.

The solution according to the invention allowed losses of both fish carcasses and of the pickling solution to be decreased, by increasing precision and by changing direction of injection of the brine or of the pickling solution. As a result, the fish carcass receives a specific dose of the pickling brine. The problem of random injection of the fish carcass is solutions known in the field, which was the reason behind the storage of injected carcasses and non-injected carcasses in a single transport container, negatively influencing the product quality, has been solved. In solutions known in the field, the solution injection using a set of needles took place perpendicularly to the body of the fish carcass placed at a random location along the conveyor belt.

In the solution according to the invention, separate nests for stabilisation of each fish carcass were designed. A new injection module has also been developed, with needles introduced into the carcass in parallel to the carcass spine. The injection process was accelerated through concerted action of the conveyor belt and of the injecting module. According to the invention, the problem of carcass destruction caused by the vertical movement of the injecting needles or by excessive hydration of the pickled mass during the method involving carcass soaking in brine, known in the field, has been solved. In the solution according to the invention, the problem of carcass skin puncturing during injection in the direction orthogonal to the carcass body has been eliminated, thanks to which the points where the pickling brine is introduced are not visible as carcass skin damage after the subsequent thermal processing of the fish product.

The object of the invention is presented in the attached figures in an embodiment, wherein the individual drawing figures illustrate as follows:
- Fig. 1.: Injecting module.
- Fig. 2.: Injecting head.
- Fig. 2a.: Needle module.
- Fig. 3.: Pressure element including the transport nest.
- Fig. 4.: Pressure module.
- Fig. 5.: Transport module with guides, the chain and the transport nest.
- Fig. 6.: Transport module with a shaft.

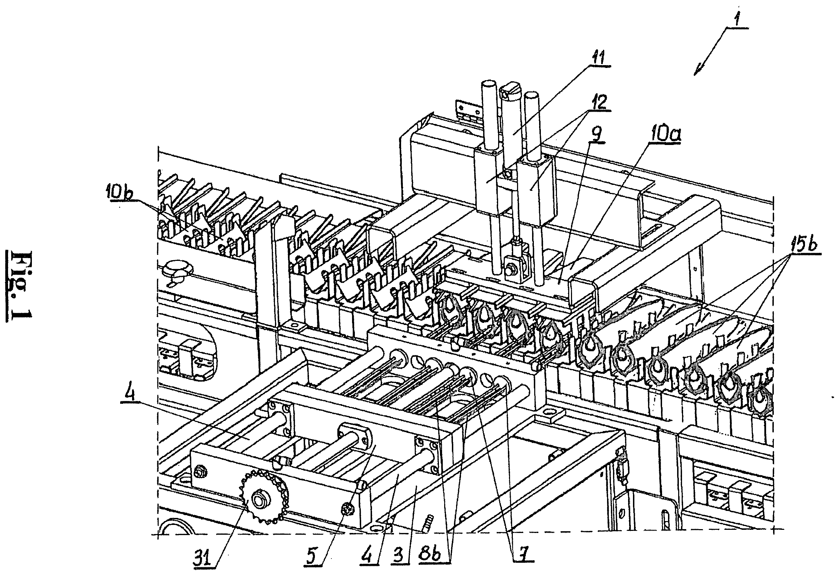

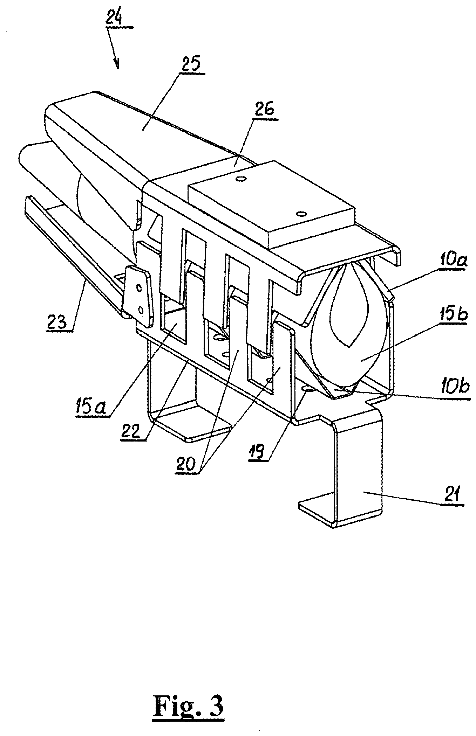

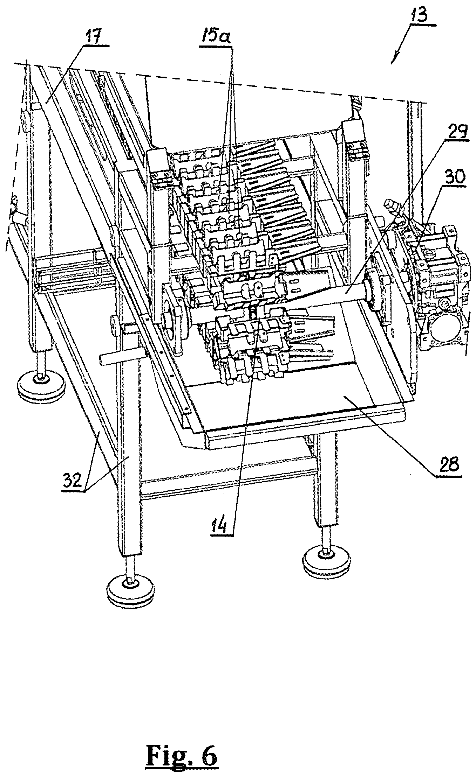

Fig. 1 presents the injecting module 1, where the process of fish carcass 15b injection using the known pickling brine takes place, with a salt concentration of 9%. Other embodiments may use a pickling solution with different composition. In the presented embodiment, fish carcasses 15b placed inside the transport nests 15a of the transport module 13 are transported by this transport module 13 to the injecting module 1, where they are stabilised by the top 10a and the bottom 10b pressure moulds forming the pressure nests 24. The pressure nest 24 is presented in Fig. 3. Once each fish carcass 15b is stabilised between the transport nest 15a and the pressure nest 24, the head 2 of the injecting module 1 introduces needles 8a of the needle module 8b into the fish carcass, parallel to the spine of the fish carcass 15b, followed by injection of the brine solution. The next stage involves removal of the injecting needles 8a from the body of the fish carcass 15b, lifting the pressure nest 24 and releasing the injected fish carcass 15b. In the presented embodiment, the injecting module 1 is provided with a chain drive 31, concerted with a pressure module 9. The injected fish carcass is next transported towards the sliding chute 28, shown in Fig. 6.

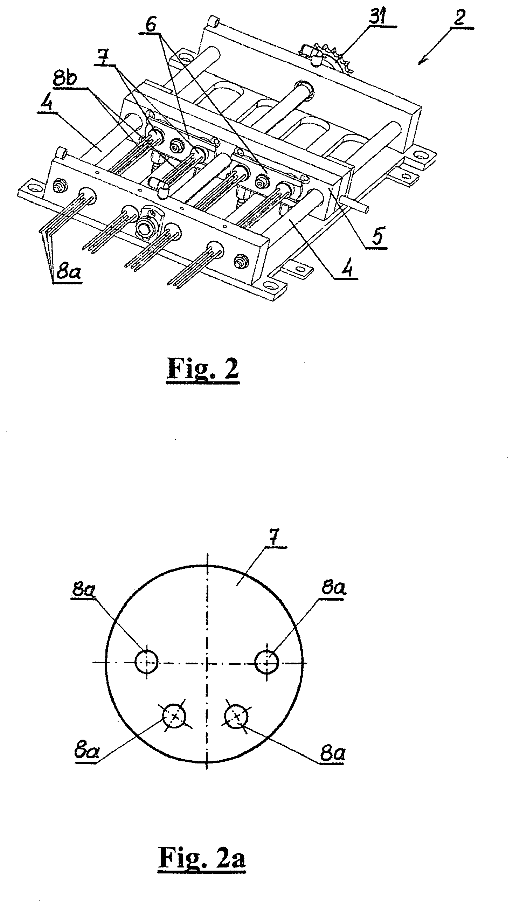

Fig. 2 presents the structure of an embodiment of the head 2 of the injecting module 1. The figure shows the injecting head 2 and the horizontal guides 4, along which the needle block 5 is sliding, equipped in this embodiment with two needle unit 6, each containing two needle modules 8b. In another embodiment, the needle unit 6 may include a different number of needle modules 8b. The needle module 8b in this embodiment includes four injecting needles 8a introduced into the fish carcass 15b, around the spine of the carcass. The module 8b is shown in the direction towards the bushing of the needle unit 7, in Fig. 2a. In another embodiment, the needles 8a may be provided in a different layout and in a different number.

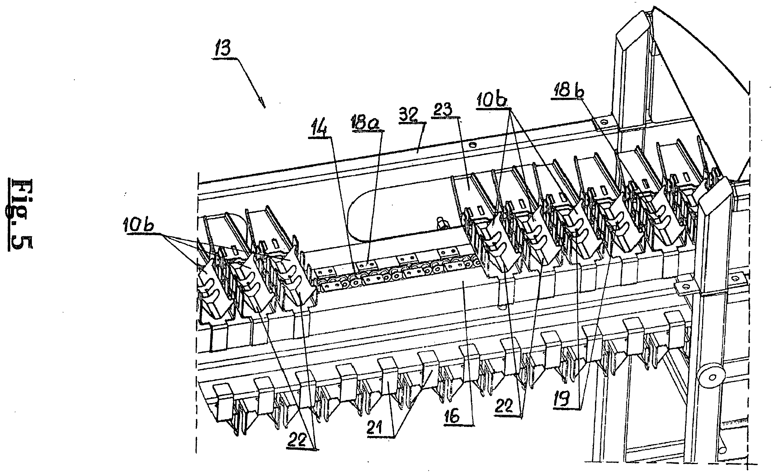

Fig. 3 shows the fish carcass 15b placed in the injection position, placed inside the transport nest 15a and stabilised by the bottom pressure mould 10b and additionally stabilised by the top pressure mould 10a. The fish carcass 15b is immobilised by the top pressure nest 24 within the transport nest 15a and is ready for injection with brine or a different pickling solution. In the embodiment of the invention according to Fig. 3, detailed structure of the pressure nest 24 is shown. In the presented embodiment, the pressure nest 24 of the fish carcass 15b includes the bottom body pad 22 with the top body pad 23 and the stabilising side elements 20. The terms body and tail should be understood in reference to the body and tail parts of the fish carcass 15b. The pressure nest 24 also includes the top tail part 25 and the top body part 26 placed in the top horizontal panel 27 with stabilising side elements. Fig. 3 also presents the fixture 21 cooperating with the sliding guide 16 of the transport module 13, as shown in Fig. 5.

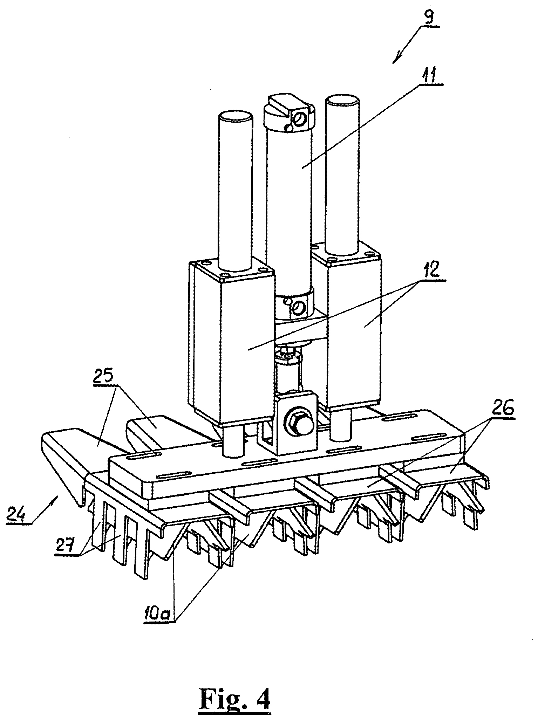

Fig. 4 shows the pressure module 9 including the lifting and lowering drive 11 concerted with the chain drive 31, the nests of the guide 12 of the pressure module 9 and the pressure nest 24. The pressure nest in this embodiment includes a top horizontal panel with stabilising side elements 27, which includes the top tail part 25 and the bottom body part 26. In this embodiment, the pressure module 9 includes four individual pressure seats 24. This is shown in Fig. 4.

Fig. 5 shows a part of the transport module 13, which in this embodiment includes a structural frame 32, on which the sliding guide 16 equipped with a transport chain 14 driven by the main drive 30 is placed, as shown in Fig. 6. In this presented embodiment, the transport chain has been equipped with a number of connector pads 18a, which cooperate with the fixing elements 19 forming the connector 18b of the transport chain with the bottom horizontal panel and stabilising side elements 20, which is also provided with fixtures 21. The stabilising side elements 20 cooperate with the sliding guide 16 during operation of the transport module 15.

Fig. 6. presents a part of the transport module 13 from the discharge side of fish carcasses after the injection. The figure shows the main drive 30 of the transport chain 14. In this presented embodiment, the sliding chute 28 for the injected fish carcasses 15b is located under the drive shaft 29. In another embodiment, the sliding chute 28 may have an open bottom, and the injected fish carcasses 15b reach a collecting container, not shown in the figure.

### List of references used in the figures.

- 1: Injecting module
- 2: Head
- 3: Head frame
- 4: Guide
- 5: Needle block
- 6: Needle unit
- 7: Needle unit bushing
- 8a: Injecting needle
- 8b: Needle module
- 9: Pressure module
- 10a: Top pressure mould
- 10b: Bottom pressure mould
- 11: Lifting and lowering drive
- 12: Guide
- 13: Transport module
- 14: Transport chain
- 15a: Transport nest
- 15b: Fish carcass
- 16: Sliding guide
- 17: Frame
- 18a: Connector pad
- 18b: Connector module
- 19: Fixing element
- 20: Stabilising side element
- 21: Fixture
- 22: Bottom body part
- 23: Bottom tail part
- 24: Top pressure nest
- 25: Top tail part
- 26: Top body part
- 27: Stabilising side element
- 28: Sliding chute
- 29: Drive shaft
- 30: Chain drive
- 31: Head drive
- 32: Structure frame

## Claims

1. A device for injecting fish carcasses, including a transport module and an injection module, wherein the transport module includes a transport chain unit, the main drive, a guide, a frame and a sliding chute for fish carcasses, while the injection module includes an injection head with a needle module, the drive mechanism of the head and pickling solution supply connectors, **characterised in that** the injection module (1) is a head (2) in the form of a frame (3) with at least one guide (4), on which a needle block (5) is placed, including at least one needle unit (6) containing at least one needle module (8b) comprising a module (8) with needles placed inside the needle unit bushing (7), wherein the injection module (1) includes a pressure module (9) for a fish carcass, including at least one top pressure mould (10b), a lifting and lowering drive (11) and at least one drive (12), while the transport module (13) includes a transport chain (14), on which at least transport nest (15a) for a fish carcass is attached (15b), wherein the bottom part of the transport nest (15a) is guided along a sliding guide (16) attached to the frame (17) of the transport module (13), wherein the transport chain (14) includes a number of connector pads (18a), wherein each connector pad (18a) cooperating with the fixing element (19) of the transport nest (15a) comprises a connector module (18b) of the transport nest (15a), while the transport nest (15a) includes stabilising side elements (20) for the fish carcass (15b), wherein the transport nest (15a) includes a fixture (21) stabilising on the sliding guide (16).

2. A device according to Claim 1, **characterised in that** the transport nest (15a) for the fish carcass (15b) includes a bottom body part (22) and a bottom tail part (23), with stabilising side elements (20)

3. A device according to Claim 1, **characterised in that** the pressure nest (24) includes a top tail part (25) and a bottom body part (26) with stabilising side elements (27)

4. A device according to Claim 1, **characterised in that** the sliding chute (28) for fish carcasses (15b) is attached under the driving shaft (29) of the transport module.

5. A device according to Claim 1, **characterised in that** the needle block (5) includes at least one needle unit (6) with injecting needles (8a)

6. A device according to Claim 1, **characterised in that** the needle module (8b) includes four injecting needles (8a).

7. A device according to Claim 1, **characterised in that** the main drive (30) is a planetary gear with a servomotor.

8. A method of injection of fish carcasses, wherein a fish carcass is transported to the injection head, where at least one needle is used to introduce the pickling solution into the fish carcass, and the fish carcass is subsequently transported onto the sliding chute, **characterised in that** each fish carcass (15b) is transported in a separate transport nest (24) of the transport module (13) to the injection module (1), where a pressure nest (21) is used to stabilise the fish carcass (15b) in the transport nest (15a) and the needle module (8b) is introduced into the carcass (15b) parallel to the spine of the fish carcass (15b), and next the pickling solution is injected and the needle module (8b) is removed from the carcass body (15b) and the pressure nest (24) is removed from the carcass (15b) and the injected carcass (15b) is transported to the sliding chute (28).

9. A method of injection according to Claim 8, **characterised in that** four carcasses (15b) are injected in the injection module (1) each time.

10. A method of injection according to Claim 8 or 9, **characterised in that** one needle module (8b) equipped with four needles is used to inject a single carcass.
